# EUROPÄISCHE PATENTANMELDUNG

(11) **EP 2 092 908 A1**
(43) Veröffentlichungstag der Anmeldung: **26.08.2009**
(21) Anmeldenummer: 09000616.4
(22) Anmeldetag: 16.01.2009
(51) Int. Cl.: A61C 3/02

(54) **Dentalbohrer aus Kunststoff**

(30) Priorität: 20.02.2008 DE 102008010049
(71) Anmelder: Gebr. Brasseler GmbH & Co. KG, 32657 Lemgo (DE)
(72) Erfinder: Danger, Karl-Heinz, 32758 Detmold (DE); Jakubzik, Mark, 32657 Lemgo (DE)
(74) Vertreter: Weber, Joachim

(57) **Zusammenfassung**

Die Erfindung bezieht sich auf einen Dentalbohrer mit einem mit Schneiden versehenen Kopf (1), welcher eine zumindest abgerundete Grundform aufweist, wobei zwei der Schneiden (2, 3) stirnseitig in eine Übergangsschneide (4) übergehen, dadurch gekennzeichnet, dass der Dentalbohrer aus einem Kunststoffmaterial gefertigt ist, welches eine Härte zwischen 60 und 250 Knoop aufweist.

## Beschreibung

Die Erfindung bezieht sich auf einen Dentalbohrer mit den Merkmalen des Oberbegriffs des Anspruchs 1.

Im Einzelnen bezieht sich die Erfindung auf einen Dentalbohrer mit einem mit Schneiden versehenen Kopf, wobei der Kopf eine zumindest abgerundete Grundform aufweist. Diese kann kugelförmig oder birnenförmig sein, so wie dies aus dem Stand der Technik vorbekannt ist.

Der Stand der Technik zeigt Zahnbohrer für die Präparation von Zähnen, welche aus Stahl, Hartmetall und Keramik gefertigt sind. Beispielsweise sind derartige Bohrer aus der 10 2006 018 933 B4 vorbekannt.

Weiterhin ist es aus dem Stand der Technik bekannt, Präparationswerkzeuge aus Kunststoff herzustellen. Derartige Werkzeuge zeigen die US 006347941 B1 und die US 006106291 A.

Ähnlich wie bei den keramischen Präparationsinstrumenten ist es bei den Kunststoff-Präparationsinstrumenten beabsichtigt, diese so auszubilden, dass ausschließlich erkranktes Dentin abgetragen wird. Dieses ist weicher als das gesunde Dentin.

Ein typischer Anwendungsfall für derartige Dentalinstrumente ist das Exkavieren im Rahmen einer Kavitätenpräparation. Hierbei werden die Dentalinstrumente üblicherweise ohne Kühlung in einem relativ niedrigen Drehzahlbereich (< 5.000 min⁻¹) betrieben. Um eine Schädigung oder Zerstörung der Pulpa zu vermeiden, ist es wichtig, dass Instrumente zum Einsatz gelangen, die keine übermäßige Wärmeentwicklung mit sich bringen.

Die vorbekannten Kunststoff-Dentalbohrer haben sich in der Praxis jedoch nicht als wirkungsvoll erwiesen.

Der Erfindung liegt die Aufgabe zugrunde, einen Dentalbohrer der eingangs genannten Art zu schaffen, welcher eine verbesserte Präparation eines Zahnes und eine verbesserte Entfernung von erkranktem Dentin bei der Kavitätenpräparation ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass der Dentalbohrer aus einem Kunststoffmaterial gefertigt ist, welches eine Härte zwischen 60 und 250 Knoop aufweist.

Die erfindungsgemäß gewählte Härte des Kunststoffmaterials zeichnet sich durch eine Reihe erheblicher Vorteile aus. So ist das Kunststoffmaterial mit der gewählten Härte zum einen in der Lage, erkranktes Dentin in zuverlässiger Weise abzutragen, während gesundes Dentin nicht oder nur in unwesentlich kleinen Mengen abgetragen wird. Hierdurch verbessert sich die Kavitätenpräparation ganz erheblich. Es besteht insbesondere nicht die Gefahr, dass der Zahnarzt unwillentlich zuviel gesundes Dentin abträgt. Er kann vielmehr beim Exkavieren zunächst ausschließlich das kranke Dentin entfernen.

Die erfindungsgemäßen Kunststoff-Dentalbohrer können aus unterschiedlichen Kunststoffen gefertigt werden, beispielsweise aus Polyoximethylen (POM), Polycarbonat (PC), Polyetherimid (PEI), Polyethersulfon (PES), Polyamidimid (PAI), Polifenilensulfon (PPSU), Polyetheretherketone (PEEK) oder Polysulfon (PSU).

In besonders günstiger Ausgestaltung der Erfindung ist vorgesehen, dass das Kunststoffmaterial zusätzlich mit Fasern verstärkt ist, beispielsweise Glasfasern, Carbonfasern oder Ähnlichem.

Die erfindungsgemäßen Dentalbohrer sind einfach und kostengünstig herstellbar. Zum einen ist es möglich, diese mit üblichen Verfahren der Kunststofftechnik, beispielsweise Spritzgießen, herzustellen. Sie können jedoch auch spanend bearbeitet werden, insbesondere um die Bohrergeometrie zu schaffen, die Schneidengeometrie zu erzeugen oder nachzuarbeiten und um die Schneiden zu schärfen.

Die erfindungsgemäße Härtemessung nach Knoop bezieht sich auf DIN EN ISO 4545. Ähnlich der Vickers-Prüfung wird bei der Knoop-Härteprüfung eine Diamantspitze mit rhombischer Form eingesetzt, die einen Spitzenwinkel von 172,5° für die lange Seite und 130° für die kurze Seite aufweist.

Erfindungsgemäß hat sich somit herausgestellt, dass der Dentalbohrer besonders vorteilhaft zur Entfernung von erkranktem Dentin aus Kavitäten bei einer Kavitätenpräparation geeignet ist, wobei erkranktes Dentin entfernt wird, gesundes Dentin jedoch geschont wird. Dies steht im Gegensatz zu metallischen Dentalbohrern, welche, bedingt durch die Materialauswahl sowie die Schneidengeometrie, auch gesundes Dentin abtragen.

Durch die Ausgestaltung der Schneiden kann erreicht werden, dass die Bohrer bei weichem/kariösem Material schneiden und bei fester, gesunder Zahnsubstanz lediglich über die Oberfläche schaben und kein Material mehr abtragen. Dadurch ergibt sich ein bestimmtes taktiles Gefühl, über das der Anwender Feedback erhält. Dieses kann durch unterschiedliche Schneidenprofile sowie unterschiedliche Schneidenteilungen und -tiefen erreicht werden, so dass sich die Wirkwinkel innerhalb eines Bohrers ggf. unterscheiden.

Die Form des Kopfes ist bevorzugterweise rund oder birnenförmig, der Kopf weist stirnseitig eine Übergangsschneide oder Querschneide auf, welche durch das Zusammenwirken zweier der mehreren Schneiden gebildet wird. Hierdurch werden die Schnittleistung sowie die Führung des Dentalbohrers verbessert.

Erfindungsgemäß ist es möglich, unterschiedliche Schneiden-Zahlen zu verwenden, vier, sechs, acht oder zehn Schneiden, abhängig von der Dimensionierung und der Gestaltung des Kopfes des erfindungsgemäßen Dentalbohrers.

Besonders günstig ist es, wenn der Spanwinkel zwischen 0° und -25° beträgt. Dabei ist es vorteilhaft, wenn der Keilwinkel zwischen 40° und 60° beträgt.

Durch die Abrundung des Schneidengrundes sowie durch die Abrundung der Übergänge ergibt sich ein guter Abtransport abgetragenen Späne, sie können sich nicht im Spangrund festklemmen und vermeiden so, dass zusätzliche Reibungshitze entsteht. Dies führt zu einer verbesserten Exkavierungsleistung des erfindungsgemäßen Dentalbohrers. Die Schneiden selbst sind jedoch scharf und weisen im Querschnitt eine Schneidspitze auf.

Im Folgenden wird die Erfindung anhand von Ausführungsbeispielen in Verbindung mit der Zeichnung beschrieben. Dabei zeigt:
- Fig. 1: eine schematische Seitenansicht eines erfindungsgemäßen Dentalbohrers mit im Wesentlichen kugelförmigen Kopf,
- Fig. 2: eine Seitenansicht, analog Fig. 1, mit einem im Wesentlichen birnenförmigen Kopf,
- Fig. 3 und 4: stirnseitige Draufsichten auf zwei unterschiedliche Ausführungsbeispiele,
- Fig. 5 und 6: Schnittansichten in der Radialebene der in den Fig. 3 und 4 gezeigten Ausführungsbeispiele.

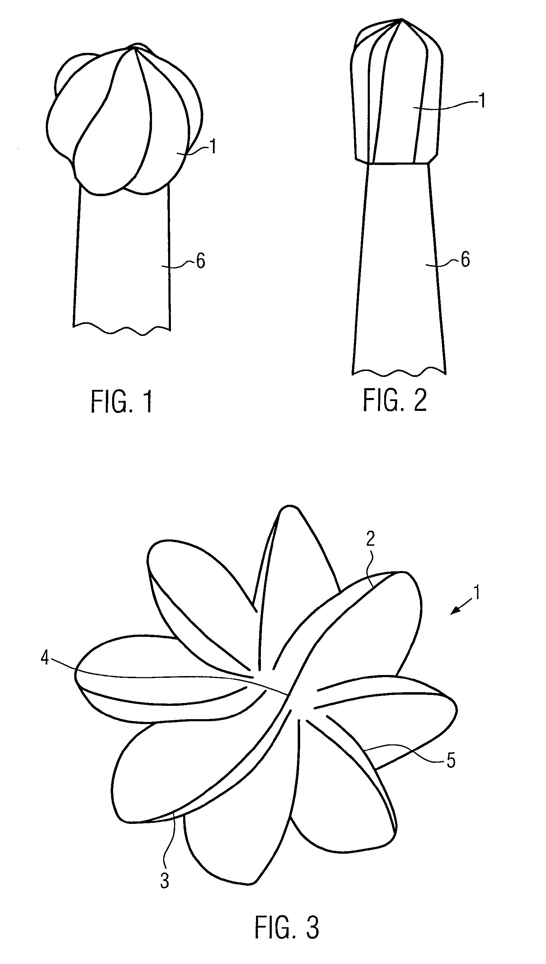

Wie sich aus den Fig. 1 und 2 ergibt, umfasst der erfindungsgemäße Dentalbohrer einen Kopf 1, der an einem Schaft 6 befestigt und einstückig mit diesem verbunden ist. Die Anzahl der Schneiden sowie die Form des Kopfes hängt von dem jeweiligen Verwendungszweck und der jeweiligen Ausgestaltung ab. Fig. 1 zeigt einen im Wesentlichen kugelförmigen Kopf, während der Kopf gemäß Fig. 2 im Wesentlichen birnenförmig ausgebildet ist.

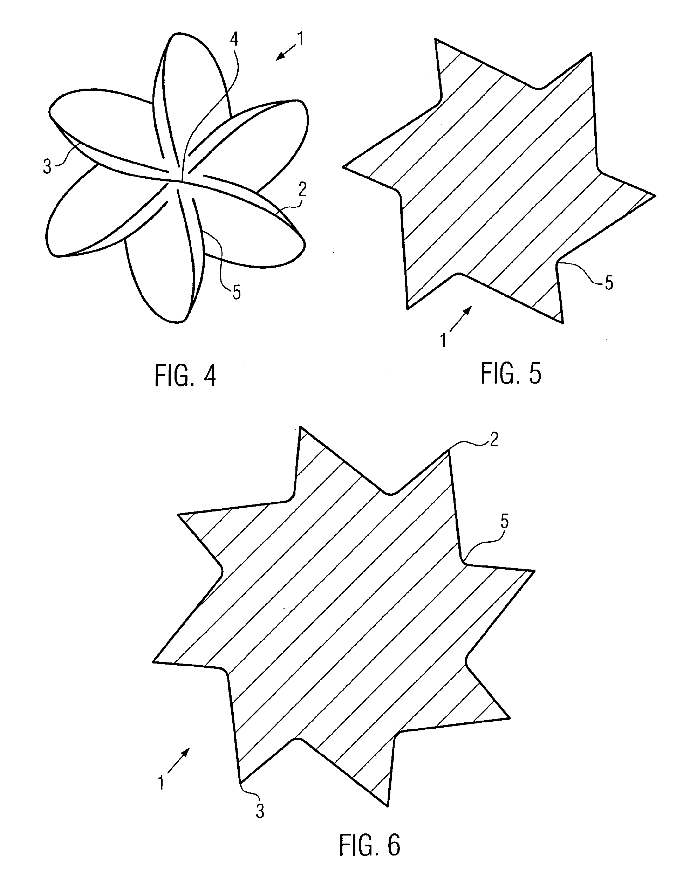

Die Fig. 3 und 4 zeigen jeweils stirnseitige Ansichten zweier unterschiedlicher Ausgestaltungsformen. Die Ausgestaltungsform der Fig. 3 umfasst insgesamt acht Schneiden. Dabei sind zwei Schneiden 2, 3 so ausgebildet, dass sie stirnseitig ineinander übergehen und eine Übergangsschneide oder Querschneide 4 bilden.

Bei dem Ausführungsbeispiel der Fig. 4 sind insgesamt sechs Schneiden vorgesehen, wobei auch die mit den Bezugszeichen 2 und 3 bezeichneten Schneiden in eine Übergangsschneide 4 oder Querschneide übergehen.

Die Fig. 5 und 6 zeigen jeweils Schnittansichten in der Radialebene (bezogen auf die Drehachse des Dentalbohrers). Die Fig. 5 korrespondiert zu dem Ausführungsbeispiel der Fig. 4, während die Fig. 6 zu dem Ausführungsbeispiel der Fig. 3 korrespondiert. Erfindungsgemäß ist vorgesehen, dass der Schneidengrund 5 einen Radius zwischen 0,03 und 0,12 mm aufweist. Es erfolgt somit eine Abrundung der Übergänge, welche Kerbspannungen herabsetzt und während des Betriebs die Anlagerung von Spänen verhindert.

### Bezugszeichenliste

- 1: Kopf
- 2: Schneide
- 3: Schneide
- 4: Übergangsschneide/Querschneide
- 5: Schneidengrund
- 6: Schaft

## Patentansprüche

1. Dentalbohrer mit einem mit Schneiden versehenen Kopf (1), welcher eine zumindest abgerundete Grundform aufweist, wobei zwei der Schneiden (2, 3) stirnseitig in eine Übergangsschneide (4) übergehen, **dadurch gekennzeichnet, dass** der Dentalbohrer aus einem Kunststoffmaterial gefertigt ist, welches eine Härte zwischen 60 und 250 Knoop aufweist.

2. Dentalbohrer nach Anspruch 1, **dadurch gekennzeichnet, dass** dieser aus Polyoximethylen (POM) gefertigt ist.

3. Dentalbohrer nach Anspruch 1, **dadurch gekennzeichnet, dass** dieser aus Polycarbonat (PC) gefertigt ist.

4. Dentalbohrer nach Anspruch 1, **dadurch gekennzeichnet, dass** dieser aus Polyetherimid (PE) gefertigt ist.

5. Dentalbohrer nach Anspruch 1, **dadurch gekennzeichnet, dass** dieser aus Polyethersulfon (PES) gefertigt ist.

6. Dentalbohrer nach Anspruch 1, **dadurch gekennzeichnet, dass** dieser aus Polysulfon (PSU) gefertigt ist.

7. Dentalbohrer nach Anspruch 1, **dadurch gekennzeichnet, dass** dieser aus Polyamidimid (PAI) gefertigt ist.

8. Dentalbohrer nach Anspruch 1, **dadurch gekennzeichnet, dass** dieser aus Polifenilensulfon (PPSU) gefertigt ist.

9. Dentalbohrer nach Anspruch 1, **dadurch gekennzeichnet, dass** dieser aus Polyetheretherketone (PEEK) gefertigt ist.

10. Dentalbohrer nach einem der Ansprüche 1 bis 9, **dadurch gekennzeichnet, dass** das Kunststoffmaterial mit Fasern verstärkt ist.

11. Dentalbohrer nach einem der Ansprüche 1 bis 10, **dadurch gekennzeichnet, dass** die Schneiden so ausgebildet sind, dass der Dentalbohrer bei weichem Material schneidet und bei fester Zahnsubstanz diese nicht abträgt.

12. Dentalbohrer nach einem der Ansprüche 1 bis 11, **dadurch gekennzeichnet, dass** der Spanwinkel zwischen 0° und - 25° beträgt.

13. Dentalbohrer nach einem der Ansprüche 1 bis 12, **dadurch gekennzeichnet, dass** der Keilwinkel zwischen 40° und 60° beträgt.

14. Dentalbohrer nach einem der Ansprüche 1 bis 13, **dadurch gekennzeichnet, dass** dieser vier Schneiden aufweist.

15. Dentalbohrer nach einem der Ansprüche 1 bis 14, **dadurch gekennzeichnet, dass** dieser sechs Schneiden aufweist.

16. Dentalbohrer nach einem der Ansprüche 1 bis 14, **dadurch gekennzeichnet, dass** dieser acht Schneiden aufweist.

17. Dentalbohrer nach einem der Ansprüche 1 bis 14, **dadurch gekennzeichnet, dass** dieser zehn Schneiden aufweist.

18. Dentalbohrer nach einem der Ansprüche 1 bis 17, **dadurch gekennzeichnet, dass** der Kopf eine runde Konturform aufweist.

19. Dentalbohrer nach einem der Ansprüche 1 bis 17, **dadurch gekennzeichnet, dass** der Kopf eine birnenförmige Konturform aufweist.

20. Dentalbohrer nach einem der Ansprüche 1 bis 19, **dadurch gekennzeichnet, dass** dieser keine Übergangsschneide hat.
